# EUROPEAN PATENT APPLICATION

(11) **EP 4 694 295 A1**
(43) Date of publication of application: **11.02.2026**
(21) Application number: 24784322.0
(22) Date of filing: 03.04.2024
(51) Int. Cl.: H04W 24/08

(54) **INFORMATION PROCESSING METHOD AND APPARATUS, AND READABLE STORAGE MEDIUM**

(30) Priority: 07.04.2023 CN 202310371187
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN)
(74) Representative: Studio Torta S.p.A.
(86) International application number: PCT/CN2024/085720
(87) International publication number: WO 2024/208240

(57) **Abstract**

The present disclosure discloses an information processing method, device, and a readable storage medium, relating to the technical field of communications, so as to realize the reporting of measurement values on L1-CLI measurement resources. The method includes: sending a first measurement value and difference information to a network device, where the difference information is used to indicate a quantized value corresponding to a difference between a second measurement value and the first measurement value, the first measurement value is a maximum value or a minimum value among N measurement values of layer 1 cross-link interference L1-CLI, N is an integer greater than 1, and the second measurement value is a measurement value other than the first measurement value among the N measurement values.

## Description

### CROSS-REFERENCE TO RELATED APPLICATION

This disclosure claims priority to the Chinese Patent Application No. 202310371187.5 filed with the China Patent Office on April 7, 2023, entitled "INFORMATION PROCESSING METHOD, DEVICE AND READABLE STORAGE MEDIUM", the entire contents of which are incorporated herein by reference.

### TECHNICAL FIELD

The present disclosure relates to the field of communication technologies, and in particular, to an information processing method, device, and readable storage medium.

### BACKGROUND

In related art, a measurement standard for Layer 1 (L1)-Cross-link interference (CLI) measurement may be a received signal strength indicator (RSSI) or a reference signal received power (RSRP). That is, for L1-CLI measurement, a user equipment (UE) may report an RSSI value on an L1-CLI measurement resource and/or report an RSRP value on an L1-CLI measurement resource.

However, there is no reporting method for L1-CLI in the related art.

### SUMMARY

Embodiments of the present disclosure provide an information processing method, device, and readable storage medium to realize reporting of measurement values on L1-CLI measurement resources.

In a first aspect, an embodiment of the present disclosure provides an information processing method, applied to a terminal, comprising:
sending a first measurement value and difference information to a network device;
wherein, the difference information is used to indicate a quantized value corresponding to a difference between a second measurement value and the first measurement value;
the first measurement value is a maximum value or a minimum value among N measurement values of layer 1 cross-link interference L1-CLI, wherein N is an integer greater than 1; the second measurement value is a measurement value other than the first measurement value among the N measurement values.

In some embodiments, the method further comprises:
quantizing the difference Q between the second measurement value and the first measurement value with the same or different step sizes within the following range to obtain the difference information:
wherein the range comprises: X dB<Q≤0dB, or 0dB≤Q<Y dB, Q is an integer, X <-30, Y>30.

In some embodiments, the method further comprises:
obtaining the difference information by one or more of the following manners:
the difference is quantized with a step size of S dB, wherein S is an integer greater than 2;
the difference is quantized with a step size of M dB, and a length of a field used to send the difference information is greater than 4 bits, wherein M is an integer greater than or equal to 2;
the difference is quantized with a step size T corresponding to a difference range in which the difference lies, wherein T is an integer greater than 0.

In some embodiments, if the difference is quantized with a step size of S=3dB, a mapping relationship between the difference and the difference information comprises:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

In some embodiments, if the difference is quantized with a step size of S=4dB, a mapping relationship between the difference and the difference information comprises:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

In some embodiments, if the difference is quantized with a step size of M=2dB, the length of the field used to send the difference information is equal to 5 bits; a mapping relationship between the difference and the difference information comprises:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

In some embodiments, if the difference is quantized with a step size of M=3dB, the length of the field used to send the difference information is equal to 5 bits; a mapping relationship between the difference and the difference information comprises:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

In some embodiments, a mapping relationship between the difference and the difference information comprises:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

In some embodiments, values of the multiple intervals comprise at least 3dB and/or 4dB.

In some embodiments, if the difference belongs to a first numerical range (-20, 0]dB, starting from 0dB, the first numerical range is divided into multiple intervals with a step size of 2dB; and/or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

In some embodiments, a mapping relationship between the difference and the difference information comprises:
if the difference belongs to a first numerical range (-10, 0]dB, starting from 0dB, the first numerical range is divided into multiple intervals with a step size of 2dB; and/or, if the difference belongs to a second numerical range (-25, -10]dB, starting from -10dB, the second numerical range is divided into multiple intervals with a step size of 3dB; and/or, if the difference belongs to a third numerical range (-45, -25]dB, starting from -25dB, the third numerical range is divided into multiple intervals with a step size of 4dB;
   or,
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

In some embodiments, the N measurement values comprise:
a received signal strength indicator RSSI value on an RSSI measurement resource and/or a reference signal received power RSRP value on an RSRP measurement resource.

In some embodiments, the method further comprises:
a step size corresponding to the quantized value being predefined; or,
sending first information to the network device, wherein the first information is used to indicate the step size corresponding to the quantized value.

In some embodiments, the first measurement value is carried by 6 bits.

In a second aspect, an embodiment of the present disclosure provides an information processing method, applied to a network device, comprising:
receiving a first measurement value and difference information sent by a terminal, wherein the difference information is a quantized value corresponding to a difference between a second measurement value and the first measurement value;
determining a target measurement value according to the first measurement value and the difference information;
wherein, the first measurement value is a maximum value or a minimum value among N measurement values of layer 1 cross-link interference L1-CLI, and the second measurement value is a measurement value other than the first measurement value among the N measurement values, wherein N is an integer greater than 1.

In some embodiments, the difference information is obtained by quantizing the difference Q between the second measurement value and the first measurement value with the same or different step sizes within the following range:
wherein the range comprises: X dB<Q≤0dB, or 0dB≤Q<Y dB, Q is an integer, X <-30, Y>30.

In some embodiments, the difference information is obtained by one or more of the following manners:
the difference is quantized with a step size of S dB, wherein S is an integer greater than 2;
the difference is quantized with a step size of M dB, and a length of a field used to send the difference information is greater than 4 bits, wherein M is an integer greater than or equal to 2;
the difference is quantized with a step size T corresponding to a difference range in which the difference lies, wherein T is an integer greater than 0.

In some embodiments, if the difference is quantized with a step size of S=3dB, a mapping relationship between the difference and the difference information comprises:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

In some embodiments, if the difference is quantized with a step size of S=4dB, a mapping relationship between the difference and the difference information comprises:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

In some embodiments, if the difference is quantized with a step size of M=2dB, the length of the field used to send the difference information is equal to 5 bits; a mapping relationship between the difference and the difference information comprises:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

In some embodiments, if the difference is quantized with a step size of M=3dB, the length of the field used to send the difference information is equal to 5 bits; a mapping relationship between the difference and the difference information comprises:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

In some embodiments, a mapping relationship between the difference and the difference information comprises:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

In some embodiments, the step sizes of the multiple intervals comprise at least 3dB or 4dB.

In some embodiments, if the difference belongs to a first numerical range (-20, 0]dB, starting from 0dB, the first numerical range is divided into multiple intervals with a step size of 2dB; or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

In some embodiments, a mapping relationship between the difference and the difference information comprises:
if the difference belongs to a first numerical range (-10, 0]dB, starting from 0dB, the first numerical range is divided into multiple intervals with a step size of 2dB; or, if the difference belongs to a second numerical range (-25, -10]dB, starting from -10dB, the second numerical range is divided into multiple intervals with a step size of 3dB; or, if the difference belongs to a third numerical range (-45, -25]dB, starting from -25dB, the third numerical range is divided into multiple intervals with a step size of 4dB;
   or
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

In some embodiments, determining the target measurement value according to the first measurement value and the difference information comprises:
obtaining a predefined step size corresponding to the quantized value, or receiving first information sent by the terminal, wherein the first information is used to indicate the step size corresponding to the quantized value;
determining the difference between the second measurement value and the first measurement value according to the first information and the difference information;
determining the target measurement value according to the first measurement value and the difference.

In some embodiments, the first measurement value is carried by 6 bits.

In some embodiments, the N measurement values comprise:
an RSSI value on an RSSI measurement resource and/or an RSRP value on an RSRP measurement resource.

In a third aspect, an embodiment of the present disclosure provides an information processing device, applied to a terminal, comprising: a memory, a transceiver, and a processor:
wherein the memory is configured to store a computer program; the transceiver is configured to transmit and receive data under the control of the processor; and the processor is configured to read the computer program in the memory and perform following operations:
sending a first measurement value and difference information to a network device;
wherein, the difference information is used to indicate a quantized value corresponding to a difference between a second measurement value and the first measurement value;
the first measurement value is a maximum value or a minimum value among N measurement values of layer 1 cross-link interference L1-CLI, wherein N is an integer greater than 1; the second measurement value is a measurement value other than the first measurement value among the N measurement values.

In some embodiments, the processor is further configured to read the computer program in the memory and perform following operations:
quantizing the difference Q between the second measurement value and the first measurement value with the same or different step sizes within the following range to obtain the difference information:
wherein the range comprises: X dB<Q≤0dB, or 0dB≤Q<Y dB, Q is an integer, X <-30, Y>30.

In some embodiments, the processor is further configured to read the computer program in the memory and perform following operations:
obtaining the difference information by one or more of the following manners:
the difference is quantized with a step size of S dB, wherein S is an integer greater than 2;
the difference is quantized with a step size of M dB, and a length of a field used to send the difference information is greater than 4 bits, wherein M is an integer greater than or equal to 2;
the difference is quantized with a step size T corresponding to a difference range in which the difference lies, wherein T is an integer greater than 0.

In some embodiments, if the difference is quantized with a step size of S=3dB, a mapping relationship between the difference and the difference information comprises:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

In some embodiments, if the difference is quantized with a step size of S=4dB, a mapping relationship between the difference and the difference information comprises:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

In some embodiments, if the difference is quantized with a step size of M=2dB, the length of the field used to send the difference information is equal to 5 bits; a mapping relationship between the difference and the difference information comprises:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

In some embodiments, if the difference is quantized with a step size of M=3dB, the length of the field used to send the difference information is equal to 5 bits; a mapping relationship between the difference and the difference information comprises:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

In some embodiments, a mapping relationship between the difference and the difference information comprises:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

In some embodiments, if the difference belongs to a first numerical range (-20, 0]dB, starting from 0dB, the first numerical range is divided into multiple intervals with a step size of 2dB; and/or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

In some embodiments, a mapping relationship between the difference and the difference information comprises:
if the difference belongs to a first numerical range (-10, 0]dB, starting from 0dB, the first numerical range is divided into multiple intervals with a step size of 2dB; and/or, if the difference belongs to a second numerical range (-25, -10]dB, starting from -10dB, the second numerical range is divided into multiple intervals with a step size of 3dB; and/or, if the difference belongs to a third numerical range (-45, -25]dB, starting from -25dB, the third numerical range is divided into multiple intervals with a step size of 4dB;
   or,
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

In some embodiments, a step size corresponding to the quantized value is predefined; or
the processor is further configured to read the computer program in the memory and perform following operations: sending first information to the network device, wherein the first information is used to indicate the step size corresponding to the quantized value.

In a fourth aspect, an embodiment of the present disclosure provides an information processing device, applied to a network device, comprising: a memory, a transceiver, and a processor:
wherein the memory is configured to store a computer program; the transceiver is configured to transmit and receive data under the control of the processor; and the processor is configured to read the computer program in the memory and perform following operations:
receiving a first measurement value and difference information sent by a terminal, wherein the difference information is a quantized value corresponding to a difference between a second measurement value and the first measurement value;
determining a target measurement value according to the first measurement value and the difference information;
wherein, the first measurement value is a maximum value or a minimum value among N measurement values of layer 1 cross-link interference L1-CLI, and the second measurement value is a measurement value other than the first measurement value among the N measurement values, wherein N is an integer greater than 1.

In some embodiments, the difference information is obtained by quantizing the difference Q between the second measurement value and the first measurement value with the same or different step sizes within the following range:
wherein the range comprises: X dB<Q≤0dB, or 0dB≤Q<Y dB, Q is an integer, X<-30, Y>30.

In some embodiments, the difference information is obtained by one or more of the following manners:
the difference is quantized with a step size of S dB, wherein S is an integer greater than 2;
the difference is quantized with a step size of M dB, and a length of a field used to send the difference information is greater than 4 bits, wherein M is an integer greater than or equal to 2;
the difference is quantized with a step size T corresponding to a difference range in which the difference lies, wherein T is an integer greater than 0.

In some embodiments, if the difference is quantized with a step size of S=3dB, a mapping relationship between the difference and the difference information comprises:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

In some embodiments, if the difference is quantized with a step size of S=4dB, a mapping relationship between the difference and the difference information comprises:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

In some embodiments, if the difference is quantized with a step size of M=2dB, the length of the field used to send the difference information is equal to 5 bits; a mapping relationship between the difference and the difference information comprises:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

In some embodiments, if the difference is quantized with a step size of M=3dB, the length of the field used to send the difference information is equal to 5 bits; a mapping relationship between the difference and the difference information comprises:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

In some embodiments, a mapping relationship between the difference and the difference information comprises:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

In some embodiments, if the difference belongs to a first numerical range (-20, 0]dB, starting from 0dB, the first numerical range is divided into multiple intervals with a step size of 2dB; or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

In some embodiments, a mapping relationship between the difference and the difference information comprises:
if the difference belongs to a first numerical range (-10, 0]dB, starting from 0dB, the first numerical range is divided into multiple intervals with a step size of 2dB; or, if the difference belongs to a second numerical range (-25, -10]dB, starting from -10dB, the second numerical range is divided into multiple intervals with a step size of 3dB; or, if the difference belongs to a third numerical range (-45, -25]dB, starting from -25dB, the third numerical range is divided into multiple intervals with a step size of 4dB;
   or
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

In some embodiments, the processor is further configured to read the computer program in the memory and perform following operations:
obtaining a predefined step size corresponding to the quantized value, or receiving first information sent by the terminal, wherein the first information is used to indicate the step size corresponding to the quantized value;
determining the difference between the second measurement value and the first measurement value according to the first information and the difference information;
determining the target measurement value according to the first measurement value and the difference.

In a fifth aspect, an embodiment of the present disclosure provides an information processing device, applied to a terminal, comprising:
a first sending unit, configured to send a first measurement value and difference information to a network device;
wherein, the difference information is used to indicate a quantized value corresponding to a difference between a second measurement value and the first measurement value;
the first measurement value is a maximum value or a minimum value among N measurement values of layer 1 cross-link interference L1-CLI, wherein N is an integer greater than 1; the second measurement value is a measurement value other than the first measurement value among the N measurement values.

In a sixth aspect, an embodiment of the present disclosure provides an information processing device, applied to a network device, comprising:
a first receiving unit, configured to receive a first measurement value and difference information sent by a terminal, wherein the difference information is a quantized value corresponding to a difference between a second measurement value and the first measurement value;
a first determining unit, configured to determine a target measurement value according to the first measurement value and the difference information;
wherein, the first measurement value is a maximum value or a minimum value among N measurement values of layer 1 cross-link interference L1-CLI, and the second measurement value is a measurement value other than the first measurement value among the N measurement values, wherein N is an integer greater than 1.

In a seventh aspect, an embodiment of the present disclosure provides a processor-readable storage medium storing a computer program, the steps in the information processing method described above are realized when the computer program is executed by a processor.

In embodiments of the present disclosure, a terminal may report a first measurement value and difference information in the L1-CLI measurement to a network, where the first measurement value is a maximum value or a minimum value among N measurement values, thereby realizing the reporting of measurement values on L1-CLI measurement resources.

### BRIEF DESCRIPTION OF THE DRAWINGS

FIG. 1 is a first flowchart of an information processing method provided by an embodiment of the present disclosure;
FIG. 2 is a second flowchart of an information processing method provided by an embodiment of the present disclosure;
FIG. 3 is a first structural diagram of an information processing device provided by an embodiment of the present disclosure;
FIG. 4 is a second structural diagram of an information processing device provided by an embodiment of the present disclosure;
FIG. 5 is a third structural diagram of an information processing device provided by an embodiment of the present disclosure;
FIG. 6 is a fourth structural diagram of an information processing device provided by an embodiment of the present disclosure.

### DETAILED DESCRIPTION

In embodiments of the present disclosure, the term "and/or" describes an association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

In embodiments of the present disclosure, the term "multiple" refers to two or more than two, and other quantifiers are similar thereto.

The following will clearly and completely describe the technical solutions in the embodiments of the present disclosure in conjunction with the drawings in the embodiments of the present disclosure. Obviously, the described embodiments are only part of the embodiments of the present disclosure, not all of the embodiments. Based on the embodiments of the present disclosure, all other embodiments obtained by those skilled in the art without creative work shall fall within the scope of protection of the present disclosure.

The embodiments of the present disclosure provide an information processing method and device, for realizing the reporting of measurement values on L1-CLI measurement resources.

Among them, the method and the device are based on the same application concept. Since the principles of solving problems by the method and the device are similar, the implementation of the device and the method can refer to each other, and the repeated parts will not be repeated.

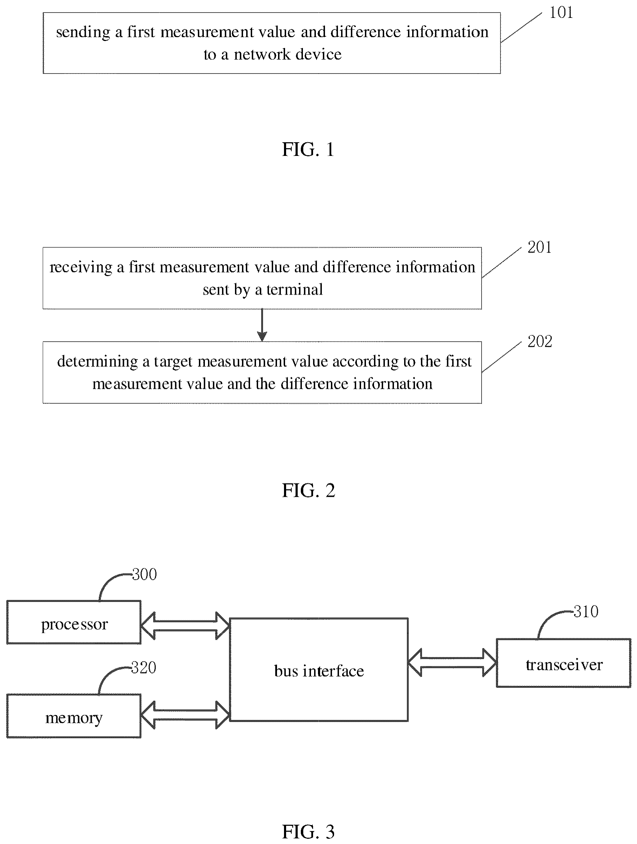

Referring to FIG. 1, FIG. 1 is a flowchart of an information processing method provided by an embodiment of the present disclosure, which is applied to a terminal and includes following steps as shown in FIG. 1:
Step 101: sending a first measurement value and difference information to a network device.

The first measurement value is a maximum value or a minimum value among N measurement values of layer 1 cross-link interference L1-CLI, where N is an integer greater than 1; the difference information is used to indicate a quantized value corresponding to a difference between a second measurement value and the first measurement value, and the second measurement value is a measurement value other than the first measurement value among the N measurement values. In some embodiments, the second measurement value may be one or more measurement values, where the N measurement values include: an RSSI value on an RSSI measurement resource and/or an RSRP value on an RSRP measurement resource. N may be specified by a protocol or configured by a network device (such as a base station). In some embodiments, the value of N may be one or more of 2, 4, 6 and 8.

In embodiments of the present disclosure, the manner of sending the first measurement value and the difference information is not limited. In some embodiments, in the embodiments of the present disclosure, the reporting of the first measurement value occupies 6 bits, and its quantization step size is 2dB in some embodiments.

The embodiment of the present disclosure may further include: quantizing the difference Q between the second measurement value and the first measurement value with the same or different step sizes within the following range to obtain the difference information, where the range includes: X dB<Q≤0dB, or 0dB≤Q<Y dB, Q is an integer, X<-30, Y>30. By determining the difference information within the above range, the L1-CLI measurement value may be reported more accurately within a larger range, so that the network device may determine whether to perform interference suppression/elimination and for which measurement resource to perform interference suppression/elimination.

For example, the difference information may be obtained by one or more of the following manners:
Manner 1: the difference is quantized with a step size of S dB, where S is an integer greater than 2, for example, S=3 or S=4.

It should be noted that in the following different implementations, if the first measurement value is the maximum value among the N measurement values, the numerical range of the difference is less than or equal to 0; if the first measurement value is the minimum value among the N measurement values, the numerical range of the difference is greater than or equal to 0.

In an implementation, if the difference is quantized with a step size of S=3dB, a mapping relationship between the difference and the difference information includes:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

In the embodiment of the present disclosure, for multiple intervals within the range of (-45, 0]dB or [0, 45)dB, the difference information corresponding to different intervals may be collectively referred to as first difference information. However, it should be noted that each interval has its own corresponding first difference information, and the corresponding first difference information may be different from each other.

For example, the protocol specifies that a step size (or a step value) is 3dB. In some embodiments, a specific mapping relationship between the difference (or measurement difference) and the difference information is shown in the following Table 1-1. As shown in Table 1-1 below, 4 bits may be used to report the difference information with a step size of 3dB within the range of the measurement difference greater than -45dB and less than or equal to 0dB.

**Table 1-1**

| difference information | measurement difference (difference from a measurement value with the largest L1-CLI) | Unit |
|---|---|---|
| DIFF_0 | 0≥Δ>-3 | dB |
| DIFF_1 | -3≥Δ>-6 | dB |
| DIFF_2 | -6≥Δ>-9 | dB |
| DIFF_3 | -9>Δ>-12 | dB |
| DIFF_4 | -12≥Δ>-15 | dB |
| DIFF_5 | -15≥Δ>-18 | dB |
| DIFF_6 | -18≥Δ>-21 | dB |
| DIFF_7 | -21≥Δ>-24 | dB |
| DIFF_8 | -24≥Δ>-27 | dB |
| DIFF_9 | -27≥Δ>-30 | dB |
| DIFF_10 | -30≥Δ>-33 | dB |
| DIFF_11 | -33≥Δ>-36 | dB |
| DIFF_12 | -36≥Δ>-39 | dB |
| DIFF_13 | -39≥Δ>-42 | dB |
| DIFF_14 | -42≥Δ>-45 | dB |
| DIFF_15 | -45≥Δ | dB |

For another example, the protocol specifies that a step size (or a step value) is 3dB. In some embodiments, a specific mapping relationship between the difference and the difference information is shown in the following Table 1-2. As shown in Table 1-2 below, 4 bits may be used to report the difference information with a step size of 3dB within the range of the difference less than 45dB and greater than or equal to 0dB.

**Table 1-2**

| difference information | measurement difference (difference from a measurement value with the smallest L1-CLI) | Unit |
|---|---|---|
| DIFF_0 | 0≤Δ<3 | dB |
| DIFF_1 | 3≤Δ<6 | dB |
| DIFF_2 | 6≤Δ<9 | dB |
| DIFF_3 | 9≤Δ<12 | dB |
| DIFF_4 | 12≤Δ<15 | dB |
| DIFF_5 | 15≤Δ<18 | dB |
| DIFF_6 | 18≤Δ<21 | dB |
| DIFF_7 | 21≤Δ<24 | dB |
| DIFF_8 | 24≤Δ<27 | dB |
| DIFF_9 | 27≤Δ<30 | dB |
| DIFF_10 | 30≤Δ<33 | dB |
| DIFF_11 | 33≤Δ<36 | dB |
| DIFF_12 | 36≤Δ<39 | dB |
| DIFF_13 | 39≤Δ<42 | dB |
| DIFF_14 | 42≤Δ<45 | dB |
| DIFF_15 | 45≤Δ | dB |

In an implementation, if the difference is quantized with a step size of S=4dB, a mapping relationship between the difference and the difference information includes:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

In the embodiment of the present disclosure, for multiple intervals within the range of (-60, 0]dB or [0, 60)dB, the difference information corresponding to different intervals may be collectively referred to as first difference information. However, it should be noted that each interval has its own corresponding first difference information, and the corresponding first difference information may be different from each other.

For example, the protocol specifies a step value of 4dB. In some embodiments, a specific mapping relationship between the difference and the difference information is shown in Table 2-1 below. As shown in Table 2-1 below, 4 bits may be used to report the difference information with a step size of 4dB within the range of the difference greater than -60dB and less than or equal to 0dB.

**Table 2-1**

| difference information | measurement difference (difference from a measurement value with the largest L1-CLI) | Unit |
|---|---|---|
| DIFF_0 | 0≥Δ>-4 | dB |
| DIFF_1 | -4≥Δ>-8 | dB |
| DIFF_2 | -8≥Δ>-12 | dB |
| DIFF_3 | -12≥Δ>-16 | dB |
| DIFF_4 | -16≥Δ>-20 | dB |
| DIFF_5 | -20≥Δ>-24 | dB |
| DIFF_6 | -24≥Δ>-28 | dB |
| DIFF_7 | -28≥Δ>-32 | dB |
| DIFF_8 | -32≥Δ>-36 | dB |
| DIFF_9 | -36≥Δ>-40 | dB |
| DIFF_10 | -40≥Δ>-44 | dB |
| DIFF_11 | -44≥Δ>-48 | dB |
| DIFF_12 | -48≥Δ>-52 | dB |
| DIFF_13 | -52≥Δ>-56 | dB |
| DIFF_14 | -56≥Δ>-60 | dB |
| DIFF_15 | -60≥Δ | dB |

For another example, the protocol specifies a step value of 4dB. In some embodiments, a specific mapping relationship between the difference and the difference information is shown in Table 2-2 below. As shown in Table 2-2 below, 4 bits may be used to report the difference information with a step size of 4dB within the range of the difference less than 60dB and greater than or equal to 0dB.

**Table 2-2**

| difference information | measurement difference (difference from a measurement value with the smallest L1-CLI) | Unit |
|---|---|---|
| DIFF_0 | 0≤Δ<4 | dB |
| DIFF_1 | 4≤Δ<8 | dB |
| DIFF_2 | 8≤Δ<12 | dB |
| DIFF_3 | 12≤Δ<16 | dB |
| DIFF_4 | 16≤Δ<20 | dB |
| DIFF_5 | 20≤Δ<24 | dB |
| DIFF_6 | 24≤Δ<28 | dB |
| DIFF_7 | 28≤Δ<32 | dB |
| DIFF_8 | 32≤Δ<36 | dB |
| DIFF_9 | 36≤Δ<40 | dB |
| DIFF_10 | 40≤Δ<44 | dB |
| DIFF_11 | 44≤Δ<48 | dB |
| DIFF_12 | 48≤Δ<52 | dB |
| DIFF_13 | 52≤Δ<56 | dB |
| DIFF_14 | 56≤Δ<60 | dB |
| DIFF_15 | 60≤Δ | dB |

Manner 2: the difference is quantized with a step size of M dB, and a length of a field used to send the difference information is greater than 4 bits, where M is an integer greater than or equal to 2.

For example, the difference is quantized with a step size of 2dB, and the length of the field used to send the difference information is greater than 4 bits; for another example, the difference is quantized with a step size of M (M>2, for example, M=3 or M=4) dB, and the length of the field used to send the difference information is greater than 4 bits.

In an implementation, if the difference is quantized with a step size of M=2dB, the length of the field used to send the difference information is equal to 5 bits; a mapping relationship between the difference and the difference information includes:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

In the embodiment of the present disclosure, for multiple intervals within the range of (-62, 0]dB or [0, 62)dB, the difference information corresponding to different intervals may be collectively referred to as first difference information. However, it should be noted that each interval has its own corresponding first difference information, and the corresponding first difference information may be different from each other.

For example, the bit field for reporting difference information is 5 bits, and the step size is 2dB. That is, there are a maximum of 32 bit states used to indicate the difference information. When all 32 bit states corresponding to 5 bits are used to indicate the difference information, the mapping relationship between the difference and the difference information is shown in Table 3-1 below. This allows difference information to be reported with the step size of 2dB within the range of the difference greater than -62dB and less than or equal to 0dB. In some embodiments, the field for reporting the L1-CLI maximum value (i.e., the first measurement value) may be 7, 6, or 5 bits. The step size of the quantized L1-CLI maximum value may be 1dB or 2dB.

For another example, the bit field for reporting difference information is 5 bits, and the step size is 2dB. That is, there are a maximum of 32 bit states used to indicate difference information. When all 32 bit states corresponding to 5 bits are used to indicate difference information, the mapping relationship between difference and difference information is shown in Table 3-2 below. This allows difference information to be reported with the step size of 2dB within the range of the difference greater than or equal to 0dB and less than 62dB. In some embodiments, the field for reporting the L1-CLI maximum value (i.e., the first measurement value) may be 7, 6, or 5 bits. The step size of the quantized L1-CLI maximum value may be 1dB or 2dB.

**Table 3-1**

| difference information | measurement difference (difference from a measurement value with the largest L1-CLI) | Unit |
|---|---|---|
| DIFF_0 | 0≥Δ>-2 | dB |
| DIFF_1 | -2≥Δ>-4 | dB |
| DIFF_2 | -4≥Δ>-6 | dB |
| DIFF_3 | -6≥Δ>-8 | dB |
| DIFF_4 | -8≥Δ>-10 | dB |
| DIFF_5 | -10≥Δ>-12 | dB |
| DIFF_6 | -12≥Δ>-14 | dB |
| DIFF_7 | -14≥Δ>-16 | dB |
| DIFF_8 | -16≥Δ>-18 | dB |
| DIFF_9 | -18≥Δ>-20 | dB |
| DIFF_10 | -20≥Δ>-22 | dB |
| DIFF_11 | -22≥Δ>-24 | dB |
| DIFF_12 | -24≥Δ>-26 | dB |
| DIFF_13 | -26≥Δ>-28 | dB |
| DIFF_14 | -28≥Δ>-30 | dB |
| DIFF_15 | -30≥Δ>-32 | dB |
| DIFF_16 | -32≥Δ>-34 | dB |
| DIFF_17 | -34≥Δ>-36 | dB |
| DIFF_18 | -36≥Δ>-38 | dB |
| DIFF_19 | -38≥Δ>-40 | dB |
| DIFF_20 | -40≥Δ>-42 | dB |
| DIFF_21 | -42≥Δ>-44 | dB |
| DIFF_22 | -44≥Δ>-46 | dB |
| DIFF_23 | -46≥Δ>-48 | dB |
| DIFF_24 | -48≥Δ>-50 | dB |
| DIFF_25 | -50≥Δ>-52 | dB |
| DIFF_26 | -52≥Δ>-54 | dB |
| DIFF_27 | -54≥Δ>-56 | dB |
| DIFF_28 | -56≥Δ>-58 | dB |
| DIFF_29 | -58≥Δ>-60 | dB |
| DIFF_30 | -60≥Δ>-62 | dB |
| DIFF_31 | -62≥Δ | dB |

**Table 3-2**

| difference information | measurement difference (difference from a measurement value with the smallest L1-CLI) | Unit |
|---|---|---|
| DIFF_0 | 0≤Δ<2 | dB |
| DIFF_1 | 2≤Δ<4 | dB |
| DIFF_2 | 4≤Δ<6 | dB |
| DIFF_3 | 6≤Δ<8 | dB |
| DIFF_4 | 8≤Δ<10 | dB |
| DIFF_5 | 10≤Δ<12 | dB |
| DIFF_6 | 12≤Δ<14 | dB |
| DIFF_7 | 14≤Δ<16 | dB |
| DIFF_8 | 16≤Δ<18 | dB |
| DIFF_9 | 18≤Δ<20 | dB |
| DIFF_10 | 20≤Δ<22 | dB |
| DIFF_11 | 22≤Δ<24 | dB |
| DIFF_12 | 24≤Δ<26 | dB |
| DIFF_13 | 26≤Δ<28 | dB |
| DIFF_14 | 28≤Δ<30 | dB |
| DIFF_15 | 30≤Δ<32 | dB |
| DIFF_16 | 32≤Δ<34 | dB |
| DIFF_17 | 34≤Δ<36 | dB |
| DIFF_18 | 36≤Δ<38 | dB |
| DIFF_19 | 38≤Δ<40 | dB |
| DIFF_20 | 40≤Δ<42 | dB |
| DIFF_21 | 42≤Δ<44 | dB |
| DIFF_22 | 44≤Δ<46 | dB |
| DIFF_23 | 46≤Δ<48 | dB |
| DIFF_24 | 48≤Δ<50 | dB |
| DIFF_25 | 50≤Δ<52 | dB |
| DIFF_26 | 52≤Δ<54 | dB |
| DIFF_27 | 54≤Δ<56 | dB |
| DIFF_28 | 56≤Δ<58 | dB |
| DIFF_29 | 58≤Δ<60 | dB |
| DIFF_30 | 60≤Δ<62 | dB |
| DIFF_31 | 62≤Δ | dB |

In an implementation, if the difference is quantized with a step size of M=3dB, the length of the field used to send the difference information is equal to 5 bits, that is, there are a maximum of 32 bit states used to indicate the difference information. When all 32 bit states corresponding to 5 bits are used to indicate the difference information, the mapping relationship between the difference and the difference information includes:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

In the embodiment of the present disclosure, for multiple intervals within the range of (-93, 0]dB or [0, 93)dB, the difference information corresponding to different intervals may be collectively referred to as first difference information. However, it should be noted that each interval has its own corresponding first difference information, and the corresponding first difference information may be different from each other.

For example, the bit field for reporting difference information is 5 bits, and the step size is 3dB. The mapping relationship between the difference and the difference information is shown in Table 4-1 below. This allows difference information to be indicated with the step size of 3dB within the range of the difference greater than -93dB and less than or equal to 0dB.

**Table 4-1**

| difference information | measurement difference (difference from a measurement value with the largest L1-CLI) | Unit |
|---|---|---|
| DIFF_0 | 0≥Δ>-3 | dB |
| DIFF_1 | -3≥Δ>-6 | dB |
| DIFF_2 | -6≥Δ>-9 | dB |
| DIFF_3 | -9≥Δ>-12 | dB |
| DIFF_4 | -12≥Δ>-15 | dB |
| DIFF_5 | -15≥Δ>-18 | dB |
| DIFF_6 | -18≥Δ>-21 | dB |
| DIFF_7 | -21≥Δ>-24 | dB |
| DIFF_8 | -24≥Δ>-27 | dB |
| DIFF_9 | -27≥Δ>-30 | dB |
| DIFF_10 | -30≥Δ>-33 | dB |
| DIFF_11 | -33≥Δ>-36 | dB |
| DIFF_12 | -36≥Δ>-39 | dB |
| DIFF_13 | -39≥Δ>-42 | dB |
| DIFF_14 | -42≥Δ>-45 | dB |
| DIFF_15 | -45≥Δ>-48 | dB |
| DIFF_16 | -48≥Δ>-51 | dB |
| DIFF_17 | -51≥Δ>-54 | dB |
| DIFF_18 | -54≥Δ>-57 | dB |
| DIFF_19 | -57≥Δ>-60 | dB |
| DIFF_20 | -60≥Δ>-63 | dB |
| DIFF_21 | -63≥Δ>-66 | dB |
| DIFF_22 | -66≥Δ>-69 | dB |
| DIFF_23 | -69≥Δ>-72 | dB |
| DIFF_24 | -72≥Δ>-75 | dB |
| DIFF_25 | -75≥Δ>-78 | dB |
| DIFF_26 | -78≥Δ>-81 | dB |
| DIFF_27 | -81≥Δ>-84 | dB |
| DIFF_28 | -84≥Δ>-87 | dB |
| DIFF_29 | -87≥Δ>-90 | dB |
| DIFF_30 | -90≥Δ>-93 | dB |
| DIFF_31 | -93≤Δ | dB |

For another example, the bit field for reporting difference information is 5 bits, and the step size is 3dB. The mapping relationship between the difference and the difference information is shown in Table 4-2 below. This allows difference information to be indicated with the step size of 3dB within the range of the difference greater than or equal to 0dB and less than 93dB.

**Table 4-2**

| difference information | measurement difference (difference from a measurement value with the smallest L1-CLI) | Unit |
|---|---|---|
| DIFF_0 | 0≤Δ<3 | dB |
| DIFF_1 | 3≤Δ<6 | dB |
| DIFF_2 | 6≤Δ<9 | dB |
| DIFF_3 | 9≤Δ<12 | dB |
| DIFF_4 | 12≤Δ<15 | dB |
| DIFF_5 | 15≤Δ<18 | dB |
| DIFF_6 | 18≤Δ<21 | dB |
| DIFF_7 | 21≤Δ< 24 | dB |
| DIFF_8 | 24≤Δ<27 | dB |
| DIFF_9 | 27≤Δ<30 | dB |
| DIFF_10 | 30≤Δ<33 | dB |
| DIFF_11 | 33≤Δ<36 | dB |
| DIFF_12 | 36≤Δ<39 | dB |
| DIFF_13 | 39≤Δ<42 | dB |
| DIFF_14 | 42≤Δ<45 | dB |
| DIFF_15 | 45≤Δ<48 | dB |
| DIFF_16 | 48≤Δ<51 | dB |
| DIFF_17 | 51≤Δ<54 | dB |
| DIFF_18 | 54≤Δ<57 | dB |
| DIFF_19 | 57≤Δ<60 | dB |
| DIFF_20 | 60≤Δ<63 | dB |
| DIFF_21 | 63≤Δ<66 | dB |
| DIFF_22 | 66≤Δ<69 | dB |
| DIFF_23 | 69≤Δ<72 | dB |
| DIFF_24 | 72≤Δ<75 | dB |
| DIFF_25 | 75≤Δ<78 | dB |
| DIFF_26 | 78≤Δ<81 | dB |
| DIFF_27 | 81≤Δ<84 | dB |
| DIFF_28 | 84≤Δ<87 | dB |
| DIFF_29 | 87≤Δ<90 | dB |
| DIFF_30 | 90≤Δ<93 | dB |
| DIFF_31 | 93≤Δ | dB |

Manner 3: the difference is quantized with a step size T corresponding to a difference range in which the difference lies, where T is an integer greater than 0, for example, T=2, T=3 or T=4.

That is, in this manner, the difference range in which the difference lies may be determined first, and the corresponding step size T may be obtained according to the corresponding relationship between the difference range and the step size, and then the difference may be quantized.

For example, when the absolute value abs(Δ) of the difference satisfies Q1≤abs(Δ)<Q2, the quantization step size is K1; when the absolute value abs(Δ) of the difference satisfies Q3≤abs(Δ)<Q4, the quantization step size is K2, where Q1<Q2<Q3<Q4, K1<K2, and both are integers greater than or equal to 0.

In an implementation, if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or

if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

In the embodiment of the present disclosure, for multiple intervals within the range of (-40, 0]dB or [0, 40)dB, the difference information corresponding to different intervals may be collectively referred to as first difference information. However, it should be noted that each interval has its own corresponding first difference information, and the corresponding first difference information may be different from each other.

Values of the multiple intervals include at least 3dB and/or 4dB. The division of the multiple intervals may be predefined or reported by the terminal to the network device.

For example, for a numerical range (-40, 0]dB, if the difference belongs to a first numerical range (-20, 0]dB, starting from 0dB, the first numerical range is divided into multiple intervals with a step size of 2dB; and/or, if the difference belongs to a second numerical range (-40, -20]dB, starting from -20dB, the second numerical range is divided into multiple intervals with a step size of 4dB.

At this time, the mapping relationship between the difference and the difference information is shown in Table 5-1.

**Table 5-1**

| difference information | measurement difference (difference from a measurement value with the largest L1-CLI) | Unit |
|---|---|---|
| DIFF_0 | 0≥Δ>-2 | dB |
| DIFF_1 | -2≥Δ>-4 | dB |
| DIFF_2 | -4≥Δ>-6 | dB |
| DIFF_3 | -6≥Δ>-8 | dB |
| DIFF_4 | -8≥Δ>-10 | dB |
| DIFF_5 | -10≥Δ>-12 | dB |
| DIFF_6 | -12≥Δ>-14 | dB |
| DIFF_7 | -14≥Δ>-16 | dB |
| DIFF_8 | -16≥Δ>-18 | dB |
| DIFF_9 | -18≥Δ>-20 | dB |
| DIFF_10 | -20≥Δ>-24 | dB |
| DIFF_11 | -24≥Δ>-28 | dB |
| DIFF_12 | -28≥Δ>-32 | dB |
| DIFF_13 | -32≥Δ>-36 | dB |
| DIFF_14 | -36≥Δ>-40 | dB |
| DIFF_15 | -40≥Δ | dB |

For another example, for a numerical range [0, 40)dB, if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

At this time, the mapping relationship between the difference and the difference information is shown in Table 5-2.

**Table 5-2**

| difference information | measurement difference (difference from a measurement value with the smallest L1-CLI) | Unit |
|---|---|---|
| DIFF_0 | 0≤Δ<2 | dB |
| DIFF_1 | 2≤Δ<4 | dB |
| DIFF_2 | 4≤Δ<6 | dB |
| DIFF_3 | 6≤Δ<8 | dB |
| DIFF_4 | 8≤Δ<10 | dB |
| DIFF_5 | 10≤Δ<12 | dB |
| DIFF_6 | 12≤Δ<14 | dB |
| DIFF_7 | 14≤Δ<16 | dB |
| DIFF_8 | 16≤Δ<18 | dB |
| DIFF_9 | 18≤Δ<20 | dB |
| DIFF_10 | 20≤Δ<24 | dB |
| DIFF_11 | 24≤Δ<28 | dB |
| DIFF_12 | 28≤Δ<32 | dB |
| DIFF_13 | 32≤Δ<36 | dB |
| DIFF_14 | 36≤Δ<40 | dB |
| DIFF_15 | 40≤Δ | dB |

In an implementation, the mapping relationship between the difference and the difference information includes:
if the difference belongs to a first numerical range (-10, 0]dB, starting from 0dB, the first numerical range is divided into multiple intervals with a step size of 2dB; and/or, if the difference belongs to a second numerical range (-25, -10]dB, starting from -10dB, the second numerical range is divided into multiple intervals with a step size of 3dB; and/or, if the difference belongs to a third numerical range (-45, -25]dB, starting from -25dB, the third numerical range is divided into multiple intervals with a step size of 4dB.

In the embodiment of the present disclosure, for multiple intervals within the range of (-10, 0]dB or (-25, -10]dB or (-45, -25]dB, each interval has its own corresponding difference information, and the corresponding difference information may be different from each other.

Specifically, the mapping relationship between the difference and the difference information may be as shown in Table 6-1.

**Table 6-1**

| difference information | measurement difference (difference from a measurement value with the largest L1-CLI) | Unit |
|---|---|---|
| DIFF_0 | 0≥Δ>-2 | dB |
| DIFF_1 | -2≥Δ>-4 | dB |
| DIFF_2 | -4≥Δ>-6 | dB |
| DIFF_3 | -6≥Δ>-8 | dB |
| DIFF_4 | -8≥Δ>-10 | dB |
| DIFF_5 | -10≥Δ>-13 | dB |
| DIFF_6 | -13≥Δ>-16 | dB |
| DIFF_7 | -16≥Δ>-19 | dB |
| DIFF_8 | -19≥Δ>-22 | dB |
| DIFF_9 | -22≥Δ>-25 | dB |
| DIFF_10 | -25≥Δ>-29 | dB |
| DIFF_11 | -29≥Δ>-33 | dB |
| DIFF_12 | -33≥Δ>-37 | dB |
| DIFF_13 | -37≥Δ>-41 | dB |
| DIFF_14 | -41≥Δ>-45 | dB |
| DIFF_15 | -45≥Δ | dB |

Alternatively, if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

In the embodiment of the present disclosure, for multiple intervals within the range of [0, 10)dB or [10, 25)dB or (25, 45]dB, each interval has its own corresponding difference information, and the corresponding difference information may be different from each other.

At this time, the mapping relationship between the difference and the difference information may be as shown in Table 6-2.

**Table 6-2**

| difference information | measurement difference (difference from a measurement value with the smallest L1-CLI) | Unit |
|---|---|---|
| DIFF_0 | 0≤Δ<2 | dB |
| DIFF_1 | 2≤Δ<4 | dB |
| DIFF_2 | 4≤Δ<6 | dB |
| DIFF_3 | 6≤Δ<8 | dB |
| DIFF_4 | 8≤Δ<10 | dB |
| DIFF_5 | 10≤Δ<13 | dB |
| DIFF_6 | 13≤Δ<16 | dB |
| DIFF_7 | 16≤Δ<19 | dB |
| DIFF_8 | 19≤Δ<22 | dB |
| DIFF_9 | 22≤Δ<25 | dB |
| DIFF_10 | 25≤Δ<29 | dB |
| DIFF_11 | 29≤Δ<33 | dB |
| DIFF_12 | 33≤Δ<37 | dB |
| DIFF_13 | 37≤Δ<41 | dB |
| DIFF_14 | 41≤Δ<45 | dB |
| DIFF_15 | 45≤Δ | dB |

In the embodiment of the present disclosure, the step size corresponding to the quantized value is predefined, or is determined by the terminal according to needs. Then, accordingly, the terminal may further send first information to the network device, where the first information is used to indicate the step size corresponding to the quantized value, so that the network device may accurately determine the corresponding measurement value.

The first information may be used to indicate that the step size is greater than 2dB, such as 3dB or 4dB. For example, the first information is indicated by 1 bit. If the first information indicates a step size of 2dB, the mapping relationship between the difference information and the difference may be as shown in Table 7-1 or Table 7-2; if the first information indicates a step size of 3dB, the mapping relationship between the difference information and the difference may be as shown in Table 3-1 or Table 3-2.

For example, the first information is indicated by 1 bit. If the information indicates that the step size is 2dB, the mapping relationship between the difference information and the difference may be as shown in Table 7-1 or Table 7-2; if the information indicates that the step size is 4dB, the mapping relationship between the difference information and the difference may be as shown in Table 4-1 or Table 4-2.

**Table 7-1**

| difference information | measurement difference (difference from a measurement value with the largest L1-CLI) | Unit |
|---|---|---|
| DIFF_0 | 0≥Δ>-2 | dB |
| DIFF_1 | -2≥Δ>-4 | dB |
| DIFF_2 | -4≥Δ>-6 | dB |
| DIFF_3 | -6≥Δ>-8 | dB |
| DIFF_4 | -8≥Δ>-10 | dB |
| DIFF_5 | -10≥Δ>-12 | dB |
| DIFF_6 | -12≥Δ>-14 | dB |
| DIFF_7 | -14≥Δ>-16 | dB |
| DIFF_8 | -16≥Δ>-18 | dB |
| DIFF_9 | -18≥Δ>-20 | dB |
| DIFF_10 | -20≥Δ>-22 | dB |
| DIFF_11 | -22≥Δ>-24 | dB |
| DIFF_12 | -24≥Δ>-26 | dB |
| DIFF_13 | -26≥Δ>-28 | dB |
| DIFF_14 | -28≥Δ>-30 | dB |
| DIFF_15 | -30≥Δ | dB |

**Table 7-2**

| difference information | measurement difference (difference from a measurement value with the smallest L1-CLI) | Unit |
|---|---|---|
| DIFF_0 | 0≤Δ<2 | dB |
| DIFF_1 | 2≤Δ<4 | dB |
| DIFF_2 | 4≤Δ<6 | dB |
| DIFF_3 | 6≤Δ<8 | dB |
| DIFF_4 | 8≤Δ<10 | dB |
| DIFF_5 | 10≤Δ<12 | dB |
| DIFF_6 | 12≤Δ<14 | dB |
| DIFF_7 | 14≤Δ<16 | dB |
| DIFF_8 | 16≤Δ<18 | dB |
| DIFF_9 | 18≤Δ<20 | dB |
| DIFF_10 | 20≤Δ<22 | dB |
| DIFF_11 | 22≤Δ<24 | dB |
| DIFF_12 | 24≤Δ<26 | dB |
| DIFF_13 | 26≤Δ<28 | dB |
| DIFF_14 | 28≤Δ<30 | dB |
| DIFF_15 | 30≤Δ | dB |

It should be noted that for the mapping relationship between the difference and the difference information shown in the aforementioned tables, whether the terminal and the network device adopt the mapping relationship shown in the table corresponding to the difference from a measurement value with the smallest L1-CLI (Table 3-2, Table 4-2, Table 5-2, Table 6-2, Table 7-2) or the mapping relationship shown in the table corresponding to the difference from a measurement value with the largest L1-CLI (Table 3-1, Table 4-1, Table 5-1, Table 6-1, Table 7-1) may be configured to the terminal by the network device or pre-specified by the protocol, etc.

In embodiments of the present disclosure, a terminal may report a first measurement value and difference information in the L1-CLI measurement to a network, where the first measurement value is a maximum value or a minimum value among N measurement values, thereby realizing the reporting of measurement values on L1-CLI measurement resources.

Referring to FIG. 2, FIG. 2 is a flowchart of an information processing method provided by an embodiment of the present disclosure, which is applied to a network device and includes following steps as shown in FIG. 2:
Step 201: receiving a first measurement value and difference information sent by a terminal, where the difference information is a quantized value corresponding to a difference between a second measurement value and the first measurement value. The first measurement value is a maximum value or a minimum value among N measurement values of layer 1 cross-link interference L1-CLI, and the second measurement value is a measurement value other than the first measurement value among the N measurement values, where N is an integer greater than 1. The N measurement values include: an RSSI value on an RSSI measurement resource and/or an RSRP value on an RSRP measurement resource.

The difference information is obtained by quantizing the difference Q between the second measurement value and the first measurement value with the same or different step sizes within the following range:
wherein the range includes: X dB<Q≤0dB, or 0dB≤Q<Y dB, Q is an integer, X<-30, Y>30.

For example, the difference information is obtained by one or more of the following manners:
the difference is quantized with a step size of S dB, where S is an integer greater than 2;
the difference is quantized with a step size of M dB, and a length of a field used to send the difference information is greater than 4 bits, where M is an integer greater than or equal to 2;
the difference is quantized with a step size T corresponding to a difference range in which the difference lies, where T is an integer greater than 0.

The mapping relationship between the difference and the difference information may refer to the description of the aforementioned embodiments.

Step 202: determining a target measurement value according to the first measurement value and the difference information;
In this step, the network device may obtain a predefined step size corresponding to the quantized value, or receive first information sent by the terminal, where the first information is used to indicate the step size corresponding to the quantized value. Thereafter, a difference between the second measurement value and the first measurement value is determined according to the first information and the difference information, and the target measurement value is determined based on the first measurement value and the difference.

In embodiments of the present disclosure, a terminal may report a first measurement value and difference information in the L1-CLI measurement to a network, where the first measurement value is a maximum value or a minimum value among N measurement values, thereby realizing the reporting of measurement values on L1-CLI measurement resources.

The technical solutions provided by the embodiments of the present disclosure may be applied to a variety of systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include terminal devices and network devices. The system may also include a core network part, such as an Evolved Packet System (EPS), a 5G System (5GS), etc.

The terminal device involved in the embodiments of the present disclosure may be a device that provides voice and/or data connectivity to a user, a handheld device with a radio connection function, or other processing devices connected to a radio modem. In different systems, the name of the terminal device may also be different. For example, in the 5G system, the terminal device may be called User Equipment (UE). The radio terminal device may communicate with one or more core networks (CN) via a radio access network (RAN). The radio terminal device may be mobile terminal devices, such as mobile phones (or "cellular" phones) and computers with mobile terminal devices, for example, portable, pocket-sized, handheld, computer-built-in or vehicle-mounted mobile devices, which exchange language and/or data with the radio access network. For example, Personal Communication Service (PCS) phones, cordless phones, Session Initiated Protocol (SIP) phones, Wireless Local Loop (WLL) stations, Personal Digital Assistants (PDAs), and other devices. The radio terminal device may also be referred to as a system, a subscriber unit, a subscriber station, a mobile station, a mobile, a remote station, an access point, a remote terminal device, an access terminal device, a user terminal device, a user agent, or a user device, but is not limited in the embodiments of the present disclosure.

The network device involved in the embodiments of the present disclosure may be a base station, which may include multiple cells providing services for terminals. Depending on the specific application scenario, the base station may also be called an access point, or may be a device in an access network that communicates with radio terminal devices through one or more sectors on the air interface, or may be called another name. The network device may be used to convert received air frames into and out of Internet Protocol (IP) packets, acting as a router between the radio terminal device and the rest of the access network, which may include an Internet Protocol (IP) communications network. The network device also coordinates the management of attributes of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutional network device (evolutional Node B, eNB or e-NodeB) in the long term evolution (LTE) system, a 5G base station (generalized Node B, gNB) in the 5G network architecture (next generation system), or a home evolved Node B (HeNB), a relay node, a femto, a pico, etc., but is not limited in the embodiments of the present disclosure. In some network structures, the network device may include a centralized unit (CU) node and a distributed unit (DU) node, and the centralized unit and the distributed unit may also be arranged geographically separately.

The network device and the terminal device may each use one or more antennas for Multiple Input Multi Output (MIMO) transmission. MIMO transmission may be single-user MIMO (SU-MIMO) or multi-user MIMO (MU-MIMO). Depending on the form and number of antenna combinations, MIMO transmission may be two-dimension MIMO (2D-MIMO), three-dimension MIMO (3D-MIMO), full-dimension MIMO (FD-MIMO), or massive MIMO, or may also be diversity transmission, precoding transmission, or beamforming transmission, etc.

As shown in FIG. 3, an information processing device according to an embodiment of the present disclosure, applied to a network device, includes: a processor 300 configured to read a program in a memory 320 and execute the following process:
receiving a first measurement value and difference information sent by a terminal, where the difference information is a quantized value corresponding to a difference between a second measurement value and the first measurement value;
determining a target measurement value according to the first measurement value and the difference information;
where the first measurement value is a maximum value or a minimum value among N measurement values of layer 1 cross-link interference L1-CLI, and the second measurement value is a measurement value other than the first measurement value among the N measurement values, where N is an integer greater than 1.

A transceiver 310 is configured to receive and transmit data under the control of the processor 300.

In FIG. 3, the bus architecture may include any number of interconnected buses and bridges, specifically linking various circuits of one or more processors represented by processor 300 and memory represented by memory 320 together. The bus architecture may also link together various other circuits such as peripheral devices, voltage regulators, and power management circuits, which are all well known in the art and, therefore, will not be described further herein. The bus interface provides an interface. The transceiver 310 may be multiple elements, i.e., including a transmitter and a receiver, providing a unit for communicating with various other devices over a transmission medium. The processor 300 is responsible for managing the bus architecture and general processing, and the memory 320 may store data used by the processor 300 when performing operations.

The processor 300 may be a central processing unit (CPU), an application specific integrated circuit (ASIC), a field programmable gate array (FPGA), or a complex programmable logic device (CPLD). The processor may also adopt a multi-core architecture.

The processor 300 is responsible for managing the bus architecture and general processing, and the memory 320 may store data used by the processor 300 when performing operations.

The N measurement values include: an RSSI value on an RSSI measurement resource and/or an RSRP value on an RSRP measurement resource.

In some embodiments, the difference information is obtained by quantizing the difference Q between the second measurement value and the first measurement value with the same or different step sizes within the following range:
where the range includes: X dB<Q≤0dB, or 0dB≤Q<Y dB, Q is an integer, X <-30, Y>30.

In some embodiments, the difference information is obtained by one or more of the following manners:
the difference is quantized with a step size of S dB, where S is an integer greater than 2;
the difference is quantized with a step size of M dB, and a length of a field used to send the difference information is greater than 4 bits, where M is an integer greater than or equal to 2;
the difference is quantized with a step size T corresponding to a difference range in which the difference lies, where T is an integer greater than 0.

In some embodiments, if the difference is quantized with a step size of S=3dB, a mapping relationship between the difference and the difference information includes:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

In some embodiments, if the difference is quantized with a step size of S=4dB, a mapping relationship between the difference and the difference information includes:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

In some embodiments, if the difference is quantized with a step size of M=2dB, the length of the field used to send the difference information is equal to 5 bits; a mapping relationship between the difference and the difference information includes:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

In some embodiments, if the difference is quantized with a step size of M=3dB, the length of the field used to send the difference information is equal to 5 bits; a mapping relationship between the difference and the difference information includes:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

In some embodiments, a mapping relationship between the difference and the difference information includes:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

In some embodiments, if the difference belongs to a first numerical range (-20, 0]dB, starting from 0dB, the first numerical range is divided into multiple intervals with a step size of 2dB; or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

In some embodiments, a mapping relationship between the difference and the difference information includes:
if the difference belongs to a first numerical range (-10, 0]dB, starting from 0dB, the first numerical range is divided into multiple intervals with a step size of 2dB; or, if the difference belongs to a second numerical range (-25, -10]dB, starting from -10dB, the second numerical range is divided into multiple intervals with a step size of 3dB; or, if the difference belongs to a third numerical range (-45, -25]dB, starting from -25dB, the third numerical range is divided into multiple intervals with a step size of 4dB;
   or
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

The processor 300 is further configured to read the program and execute the following steps:
obtaining a predefined step size corresponding to the quantized value, or receiving first information sent by the terminal, where the first information is used to indicate the step size corresponding to the quantized value;
determining the difference between the second measurement value and the first measurement value according to the first information and the difference information;
determining the target measurement value according to the first measurement value and the difference.

It should be noted here that the above-mentioned device provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

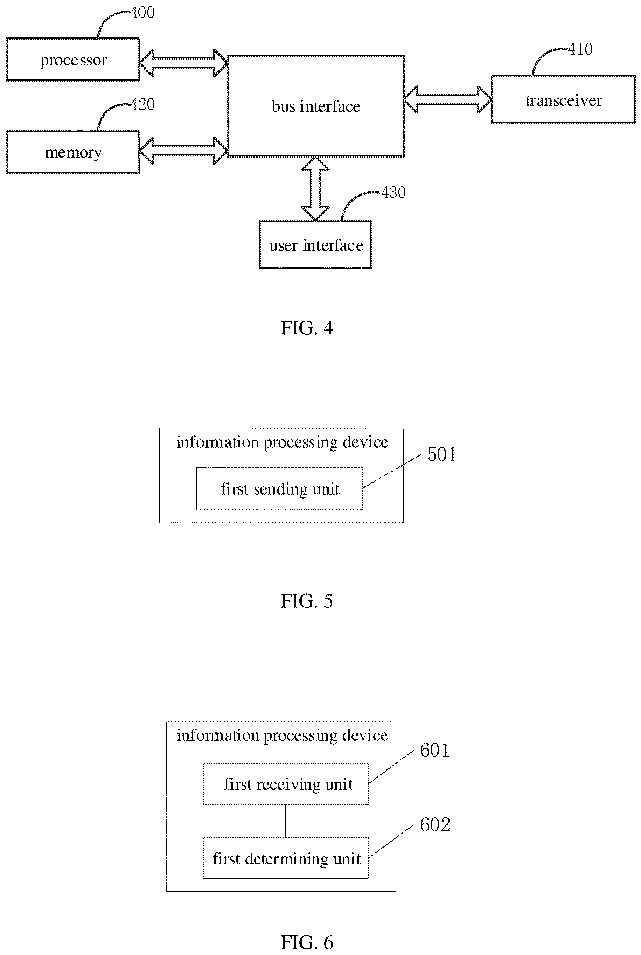

As shown in FIG. 4, an information processing device according to an embodiment of the present disclosure, applied to a terminal, includes: a processor 400 configured to read a program in a memory 420 and execute the following processes:
sending a first measurement value and difference information to a network device;
where the difference information is used to indicate a quantized value corresponding to a difference between a second measurement value and the first measurement value;
the first measurement value is a maximum value or a minimum value among N measurement values of layer 1 cross-link interference L1-CLI, where N is an integer greater than 1; the second measurement value is a measurement value other than the first measurement value among the N measurement values.

A transceiver 410 is configured to receive and transmit data under the control of the processor 400.

In FIG. 4, the bus architecture may include any number of interconnected buses and bridges, specifically linking various circuits of one or more processors represented by processor 400 and memory represented by memory 420 together. The bus architecture may also link together various other circuits such as peripheral devices, voltage regulators, and power management circuits, which are all well known in the art and, therefore, will not be described further herein. The bus interface provides an interface. The transceiver 410 may be multiple elements, i.e., including a transmitter and a receiver, providing a unit for communicating with various other devices over a transmission medium. For different user devices, the user interface 440 may also be an interface capable of connecting to external or internal devices as required, and the connected devices include but are not limited to a keypad, a display, a speaker, a microphone, a joystick, and the like.

The processor 400 is responsible for managing the bus architecture and general processing, and the memory 420 may store data used by the processor 400 when performing operations.

The processor 400 may be a CPU, an ASIC, an FPGA or a CPLD. The processor may also adopt a multi-core architecture.

The processor calls the computer program stored in the memory to execute any of the methods provided in the embodiments of the present disclosure according to the obtained executable instructions. The processor and memory may also be physically separated.

The N measurement values include: an RSSI value on an RSSI measurement resource and/or an RSRP value on an RSRP measurement resource.

The processor 400 is further configured to read the program and execute the following steps:
quantizing the difference Q between the second measurement value and the first measurement value with the same or different step sizes within the following range to obtain the difference information:
where the range includes: X dB<Q≤0dB, or 0dB≤Q<Y dB, Q is an integer, X <-30, Y>30.

The processor 400 is further configured to read the program and execute the following steps:
obtaining the difference information by one or more of the following manners:
the difference is quantized with a step size of S dB, where S is an integer greater than 2;
the difference is quantized with a step size of M dB, and a length of a field used to send the difference information is greater than 4 bits, where M is an integer greater than or equal to 2;
the difference is quantized with a step size T corresponding to a difference range in which the difference lies, where T is an integer greater than 0.

The mapping relationship between the difference and the difference information may refer to the description of the aforementioned method embodiments.

In some embodiments, the step size corresponding to the quantized value is predefined; or,
the processor is further configured to read the computer program in the memory and perform following operations: sending first information to the network device, where the first information is used to indicate the step size corresponding to the quantized value.

It should be noted here that the above-mentioned device provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

As shown in FIG. 5, an information processing device according to an embodiment of the present disclosure, applied to a terminal, includes:
a first sending unit 501, configured to send a first measurement value and difference information to a network device;
where the difference information is used to indicate a quantized value corresponding to a difference between a second measurement value and the first measurement value; the first measurement value is a maximum value or a minimum value among N measurement values of layer 1 cross-link interference L1-CLI, where N is an integer greater than 1;
the second measurement value is a measurement value other than the first measurement value among the N measurement values.

The N measurement values include: an RSSI value on an RSSI measurement resource and/or an RSRP value on an RSRP measurement resource.

In some embodiments, the device may further include:
a first processing unit, configured to quantize the difference Q between the second measurement value and the first measurement value with the same or different step sizes within the following range to obtain the difference information:
where the range includes: X dB<Q≤0dB, or 0dB≤Q<Y dB, Q is an integer, X <-30, Y>30.

In some embodiments, the device may further include:
a second processing unit, configured to obtain the difference information by one or more of the following manners:
the difference is quantized with a step size of S dB, where S is an integer greater than 2;
the difference is quantized with a step size of M dB, and a length of a field used to send the difference information is greater than 4 bits, where M is an integer greater than or equal to 2;
the difference is quantized with a step size T corresponding to a difference range in which the difference lies, where T is an integer greater than 0.

The mapping relationship between the difference and the difference information may refer to the description of the aforementioned method embodiments.

The step size corresponding to the quantized value is predefined; or the device may further include:
a second sending unit, configured to send first information to the network device, where the first information is used to indicate the step size corresponding to the quantized value.

In some embodiments, the first measurement value is carried by 6 bits.

It should be noted here that the above-mentioned device provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

As shown in FIG. 6, an information processing device according to an embodiment of the present disclosure, applied to a network device, includes:
a first receiving unit 601, configured to receive a first measurement value and difference information sent by a terminal, where the difference information is a quantized value corresponding to a difference between a second measurement value and the first measurement value; a first determining unit 602, configured to determine a target measurement value according to the first measurement value and the difference information;
where the first measurement value is a maximum value or a minimum value among N measurement values of layer 1 cross-link interference L1-CLI, and the second measurement value is a measurement value other than the first measurement value among the N measurement values, where N is an integer greater than 1.

In some embodiments, the N measurement values include:
an RSSI value on an RSSI measurement resource and/or an RSRP value on an RSRP measurement resource.

In some embodiments, the difference information is obtained by quantizing the difference Q between the second measurement value and the first measurement value with the same or different step sizes within the following range:
where the range includes: X dB<Q≤0dB, or 0dB≤Q<Y dB, Q is an integer, X <-30, Y>30.

In some embodiments, the difference information is obtained by one or more of the following manners:
the difference is quantized with a step size of S dB, where S is an integer greater than 2;
the difference is quantized with a step size of M dB, and a length of a field used to send the difference information is greater than 4 bits, where M is an integer greater than or equal to 2;
the difference is quantized with a step size T corresponding to a difference range in which the difference lies, where T is an integer greater than 0.

The mapping relationship between the difference and the difference information may refer to the description of the aforementioned method embodiments.

In some embodiments, the first determining unit includes:
a first obtaining subunit, configured to obtain a predefined step size corresponding to the quantized value, or receive first information sent by the terminal, where the first information is used to indicate the step size corresponding to the quantized value;
a first determining subunit, configured to determine the difference between the second measurement value and the first measurement value according to the first information and the difference information;
a second determining subunit, configured to determine the target measurement value according to the first measurement value and the difference.

In some embodiments, the first measurement value is carried by 6 bits.

It should be noted here that the above-mentioned device provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

It should be noted that the division of units in the embodiments of the present disclosure is schematic and is merely a logical function division. There may be other division methods in actual implementation. In addition, each functional unit in each embodiment of the present disclosure may be integrated into one processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it may be stored in a processor-readable storage medium. Based on this understanding, the technical solution of the present disclosure, or the part that contributes to the relevant technology, or all or part of the technical solution may be embodied in the form of a software product. The computer software product is stored in a storage medium and includes a number of instructions for enabling a computer device (which may be a personal computer, a server, or a network device, etc.) or a processor to execute all or part of the steps of the method described in each embodiment of the present disclosure. The aforementioned storage medium includes: U disk, mobile hard disk, read-only memory (ROM), random access memory (RAM), magnetic disk or optical disk, etc., which may store program codes.

The embodiment of the present disclosure further provides a communication device, including: a memory, a processor, and a program stored in the memory and executable on the processor, where the processor implements the steps of the above-described information processing method when executing the program.

The embodiment of the present disclosure also provides a processor-readable storage medium, storing a program. When the program is executed by the processor, the various processes of the above-mentioned information processing method embodiment are implemented and the same technical effects may be achieved. To avoid repetition, it will not be repeated here. The readable storage medium may be any available medium or data storage device that may be accessed by the processor, including but not limited to magnetic storage (such as floppy disk, hard disk, magnetic tape (Magneto-Optical, MO),etc.), optical storage (such as compact disc (CD), high-density digital video disc (DVD), Blu-ray disc (BD), high-definition versatile disc (HVD), etc.), and semiconductor memory (such as ROM, erasable programmable read-only memory (EPROM), electrically erasable programmable read-only memory (EEPROM), non-volatile memory (NAND FLASH), solid state disk (SSD)), etc.

It should be noted that, in this disclosure, the terms "comprise", "include" or any other variations thereof are intended to cover non-exclusive inclusion, so that a process, method, article or device that includes a series of elements includes not only those elements, but also includes other elements not explicitly listed, or also includes elements that are inherent to such process, method, article or device. Without further constraints, an element defined by the phrase "comprise a..." does not exclude the existence of other identical elements in the process, method, article or device that includes the element.

Through the description of the above implementations, those skilled in the art can clearly understand that the above embodiment methods may be implemented by means of software plus the necessary general hardware platform, and of course may also be implemented by hardware, but in many cases the former is a better implementation. Based on this understanding, the technical solution of the present disclosure, or the part that contributes to the relevant technology, may be embodied in the form of a software product. The computer software product is stored in a storage medium (such as ROM/RAM, disk, CD-ROM), and includes a number of instructions for enabling a terminal (which may be a mobile phone, a computer, a server, an air conditioner, or a network device, etc.) to execute the methods described in the various embodiments of the present disclosure.

It should be noted that, it should be understood that the division of the above modules is merely a division of logical functions, and in actual implementation, they may be fully or partially integrated into one physical entity, or they may be physically separated. These modules may all be implemented in the form of software called by processing elements; they may also all be implemented in the form of hardware; or some modules may be implemented in the form of software called by processing elements, and some modules may be implemented in the form of hardware. For example, the determining module may be a separately established processing element, or may be integrated into a chip of the above-mentioned device. In addition, it may also be stored in the memory of the above-mentioned device in the form of program code, and called by a processing element of the above-mentioned device to execute functions of the above determining module. The implementation of other modules is similar. In addition, all or part of these modules may be integrated together or implemented independently. The processing element mentioned here may be an integrated circuit having a signal processing capability. During implementation, each step of the above method or each module above may be realized by an integrated logic circuit of hardware in a processor element or by instructions in the form of software.

For example, each module, unit, subunit or submodule may be one or more integrated circuits configured to implement the above method, such as: one or more application specific integrated circuits (ASICs), or, one or more microprocessors (digital signal processors, DSPs), or, one or more field programmable gate arrays (FPGAs), etc. For another example, when a certain module above is implemented in the form of a processing element scheduling program codes, the processing element may be a general-purpose processor, such as a central processing unit (CPU) or other processor that may call program codes. For another example, these modules may be integrated together and implemented in the form of a system-on-a-chip (SOC).

The terms "first", "second", and the like in the description and claims of the present disclosure are used to distinguish similar objects but not necessarily to describe a particular sequence or order. It should be understood that the terms so used are interchangeable under appropriate circumstances to enable the embodiments of the disclosure described herein to be practiced in sequences other than those illustrated or described herein. In addition, the use of "and/or" in the description and claims indicates at least one of the connected objects, for example, A and/or B and/or C, indicating seven situations including A alone, B alone, C alone, both A and B exist, both B and C exist, both A and C exist, and A, B and C exist. Similarly, the use of "at least one of A and B" in the description and claims should be understood as "A alone, B alone, or both A and B exist".

The embodiments of the present disclosure are described above in conjunction with the accompanying drawings, but the present disclosure is not limited to the above-mentioned specific implementations. The above-mentioned specific implementations are merely illustrative and not restrictive. Under the guidance of the present disclosure, ordinary technicians in this field may also make many forms without departing from the scope of protection of the purpose and the claims of the present disclosure, all of which fall within the scope of protection of the present disclosure.

## Claims

1. An information processing method, applied to a terminal, comprising:
sending a first measurement value and difference information to a network device;
wherein, the difference information is used to indicate a quantized value corresponding to a difference between a second measurement value and the first measurement value;
the first measurement value is a maximum value or a minimum value among N measurement values of layer 1 cross-link interference L1-CLI, wherein N is an integer greater than 1;
the second measurement value is a measurement value other than the first measurement value among the N measurement values.

2. The method according to claim 1, further comprising:
quantizing the difference Q between the second measurement value and the first measurement value with the same or different step sizes within the following range to obtain the difference information:
wherein the range comprises: X dB<Q≤0dB, or 0dB≤Q<Y dB, Q is an integer, X< -30, Y>30.

3. The method according to claim 1, further comprising:
obtaining the difference information by one or more of the following manners:
the difference is quantized with a step size of S dB, wherein S is an integer greater than 2;
the difference is quantized with a step size of M dB, and a length of a field used to send the difference information is greater than 4 bits, wherein M is an integer greater than or equal to 2;
the difference is quantized with a step size T corresponding to a difference range in which the difference lies, wherein T is an integer greater than 0.

4. The method according to claim 3, wherein, if the difference is quantized with a step size of S=3dB, a mapping relationship between the difference and the difference information comprises:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

5. The method according to claim 3, wherein, if the difference is quantized with a step size of S=4dB, a mapping relationship between the difference and the difference information comprises:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

6. The method according to claim 3, wherein, if the difference is quantized with a step size of M=2dB, the length of the field used to send the difference information is equal to 5 bits; a mapping relationship between the difference and the difference information comprises:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

7. The method according to claim 3, wherein, if the difference is quantized with a step size of M=3dB, the length of the field used to send the difference information is equal to 5 bits; a mapping relationship between the difference and the difference information comprises:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

8. The method according to claim 3, wherein a mapping relationship between the difference and the difference information comprises:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

9. The method according to claim 8, wherein values of the multiple intervals comprise at least 3dB and/or 4dB.

10. The method according to claim 8, wherein, if the difference belongs to a first numerical range (-20, 0]dB, starting from 0dB, the first numerical range is divided into multiple intervals with a step size of 2dB; and/or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

11. The method according to claim 3, wherein a mapping relationship between the difference and the difference information comprises:
if the difference belongs to a first numerical range (-10, 0]dB, starting from 0dB, the first numerical range is divided into multiple intervals with a step size of 2dB; and/or, if the difference belongs to a second numerical range (-25, -10]dB, starting from -10dB, the second numerical range is divided into multiple intervals with a step size of 3dB; and/or, if the difference belongs to a third numerical range (-45, -25]dB, starting from -25dB, the third numerical range is divided into multiple intervals with a step size of 4dB;
or,
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

12. The method according to claim 1, wherein the N measurement values comprise:
a received signal strength indicator RSSI value on an RSSI measurement resource and/or a reference signal received power RSRP value on an RSRP measurement resource.

13. The method according to claim 1, further comprising:
a step size corresponding to the quantized value being predefined; or,
sending first information to the network device, wherein the first information is used to indicate the step size corresponding to the quantized value.

14. The method according to claim 1, wherein the first measurement value is carried by 6 bits.

15. An information processing method, applied to a network device, comprising:
receiving a first measurement value and difference information sent by a terminal, wherein the difference information is a quantized value corresponding to a difference between a second measurement value and the first measurement value;
determining a target measurement value according to the first measurement value and the difference information;
wherein, the first measurement value is a maximum value or a minimum value among N measurement values of layer 1 cross-link interference L1-CLI, and the second measurement value is a measurement value other than the first measurement value among the N measurement values, wherein N is an integer greater than 1.

16. The method according to claim 15, wherein the difference information is obtained by quantizing the difference Q between the second measurement value and the first measurement value with the same or different step sizes within the following range:
wherein the range comprises: X dB<Q≤0dB, or 0dB≤Q<Y dB, Q is an integer, X< -30, Y>30.

17. The method according to claim 15, wherein the difference information is obtained by one or more of the following manners:
the difference is quantized with a step size of S dB, wherein S is an integer greater than 2;
the difference is quantized with a step size of M dB, and a length of a field used to send the difference information is greater than 4 bits, wherein M is an integer greater than or equal to 2;
the difference is quantized with a step size T corresponding to a difference range in which the difference lies, wherein T is an integer greater than 0.

18. The method according to claim 17, wherein, if the difference is quantized with a step size of S=3dB, a mapping relationship between the difference and the difference information comprises:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

19. The method according to claim 17, wherein, if the difference is quantized with a step size of S=4dB, a mapping relationship between the difference and the difference information comprises:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

20. The method according to claim 17, wherein, if the difference is quantized with a step size of M=2dB, the length of the field used to send the difference information is equal to 5 bits; a mapping relationship between the difference and the difference information comprises:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

21. The method according to claim 17, wherein, if the difference is quantized with a step size of M=3dB, the length of the field used to send the difference information is equal to 5 bits; a mapping relationship between the difference and the difference information comprises:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

22. The method according to claim 17, wherein a mapping relationship between the difference and the difference information comprises:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

23. The method according to claim 22, wherein the step sizes of the multiple intervals comprise at least 3dB or 4dB.

24. The method according to claim 22, wherein, if the difference belongs to a first numerical range (-20, 0]dB, starting from 0dB, the first numerical range is divided into multiple intervals with a step size of 2dB; or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

25. The method according to claim 17, wherein a mapping relationship between the difference and the difference information comprises:
if the difference belongs to a first numerical range (-10, 0]dB, starting from 0dB, the first numerical range is divided into multiple intervals with a step size of 2dB; or, if the difference belongs to a second numerical range (-25, -10]dB, starting from -10dB, the second numerical range is divided into multiple intervals with a step size of 3dB; or, if the difference belongs to a third numerical range (-45, -25]dB, starting from -25dB, the third numerical range is divided into multiple intervals with a step size of 4dB;
or
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

26. The method according to claim 15, wherein determining the target measurement value according to the first measurement value and the difference information comprises:
obtaining a predefined step size corresponding to the quantized value, or receiving first information sent by the terminal, wherein the first information is used to indicate the step size corresponding to the quantized value;
determining the difference between the second measurement value and the first measurement value according to the first information and the difference information;
determining the target measurement value according to the first measurement value and the difference.

27. The method according to claim 26, wherein the first measurement value is carried by 6 bits.

28. The method according to claim 15, wherein the N measurement values comprise:
an RSSI value on an RSSI measurement resource and/or an RSRP value on an RSRP measurement resource.

29. An information processing device, applied to a terminal, comprising: a memory, a transceiver, and a processor:
wherein the memory is configured to store a computer program; the transceiver is configured to transmit and receive data under the control of the processor; and the processor is configured to read the computer program in the memory and perform following operations:
sending a first measurement value and difference information to a network device;
wherein, the difference information is used to indicate a quantized value corresponding to a difference between a second measurement value and the first measurement value;
the first measurement value is a maximum value or a minimum value among N measurement values of layer 1 cross-link interference L1-CLI, wherein N is an integer greater than 1;
the second measurement value is a measurement value other than the first measurement value among the N measurement values.

30. The device according to claim 29, wherein the processor is further configured to read the computer program in the memory and perform following operations:
quantizing the difference Q between the second measurement value and the first measurement value with the same or different step sizes within the following range to obtain the difference information:
wherein the range comprises: X dB<Q≤0dB, or 0dB≤Q<Y dB, Q is an integer, X< -30, Y>30.

31. The device according to claim 29, wherein the processor is further configured to read the computer program in the memory and perform following operations:
obtaining the difference information by one or more of the following manners:
the difference is quantized with a step size of S dB, wherein S is an integer greater than 2;
the difference is quantized with a step size of M dB, and a length of a field used to send the difference information is greater than 4 bits, wherein M is an integer greater than or equal to 2;
the difference is quantized with a step size T corresponding to a difference range in which the difference lies, wherein T is an integer greater than 0.

32. The device according to claim 31, wherein, if the difference is quantized with a step size of S=3dB, a mapping relationship between the difference and the difference information comprises:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

33. The device according to claim 31, wherein, if the difference is quantized with a step size of S=4dB, a mapping relationship between the difference and the difference information comprises:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

34. The device according to claim 31, wherein, if the difference is quantized with a step size of M=2dB, the length of the field used to send the difference information is equal to 5 bits; a mapping relationship between the difference and the difference information comprises:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

35. The device according to claim 31, wherein, if the difference is quantized with a step size of M=3dB, the length of the field used to send the difference information is equal to 5 bits; a mapping relationship between the difference and the difference information comprises:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

36. The device according to claim 31, wherein a mapping relationship between the difference and the difference information comprises:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

37. The device according to claim 36, wherein, if the difference belongs to a first numerical range (-20, 0]dB, starting from 0dB, the first numerical range is divided into multiple intervals with a step size of 2dB; and/or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

38. The device according to claim 31, wherein a mapping relationship between the difference and the difference information comprises:
if the difference belongs to a first numerical range (-10, 0]dB, starting from 0dB, the first numerical range is divided into multiple intervals with a step size of 2dB; and/or, if the difference belongs to a second numerical range (-25, -10]dB, starting from -10dB, the second numerical range is divided into multiple intervals with a step size of 3dB; and/or, if the difference belongs to a third numerical range (-45, -25]dB, starting from -25dB, the third numerical range is divided into multiple intervals with a step size of 4dB;
or,
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

39. The device according to claim 31, wherein a step size corresponding to the quantized value is predefined; or
the processor is further configured to read the computer program in the memory and perform following operations: sending first information to the network device, wherein the first information is used to indicate the step size corresponding to the quantized value.

40. An information processing device, applied to a network device, comprising: a memory, a transceiver, and a processor:
wherein the memory is configured to store a computer program; the transceiver is configured to transmit and receive data under the control of the processor; and the processor is configured to read the computer program in the memory and perform following operations:
receiving a first measurement value and difference information sent by a terminal, wherein the difference information is a quantized value corresponding to a difference between a second measurement value and the first measurement value;
determining a target measurement value according to the first measurement value and the difference information;
wherein, the first measurement value is a maximum value or a minimum value among N measurement values of layer 1 cross-link interference L1-CLI, and the second measurement value is a measurement value other than the first measurement value among the N measurement values, wherein N is an integer greater than 1.

41. The device according to claim 40, wherein the difference information is obtained by quantizing the difference Q between the second measurement value and the first measurement value with the same or different step sizes within the following range:
wherein the range comprises: X dB<Q≤0dB, or 0dB≤Q<Y dB, Q is an integer, X< -30, Y>30.

42. The device according to claim 40, wherein the difference information is obtained by one or more of the following manners:
the difference is quantized with a step size of S dB, wherein S is an integer greater than 2;
the difference is quantized with a step size of M dB, and a length of a field used to send the difference information is greater than 4 bits, wherein M is an integer greater than or equal to 2;
the difference is quantized with a step size T corresponding to a difference range in which the difference lies, wherein T is an integer greater than 0.

43. The device according to claim 42, wherein, if the difference is quantized with a step size of S=3dB, a mapping relationship between the difference and the difference information comprises:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

44. The device according to claim 42, wherein, if the difference is quantized with a step size of S=4dB, a mapping relationship between the difference and the difference information comprises:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

45. The device according to claim 42, wherein, if the difference is quantized with a step size of M=2dB, the length of the field used to send the difference information is equal to 5 bits; a mapping relationship between the difference and the difference information comprises:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

46. The device according to claim 42, wherein, if the difference is quantized with a step size of M=3dB, the length of the field used to send the difference information is equal to 5 bits; a mapping relationship between the difference and the difference information comprises:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

47. The device according to claim 42, wherein a mapping relationship between the difference and the difference information comprises:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

48. The device according to claim 47, wherein, if the difference belongs to a first numerical range (-20, 0]dB, starting from 0dB, the first numerical range is divided into multiple intervals with a step size of 2dB; or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

49. The device according to claim 42, wherein a mapping relationship between the difference and the difference information comprises:
if the difference belongs to a first numerical range (-10, 0]dB, starting from 0dB, the first numerical range is divided into multiple intervals with a step size of 2dB; or, if the difference belongs to a second numerical range (-25, -10]dB, starting from -10dB, the second numerical range is divided into multiple intervals with a step size of 3dB; or, if the difference belongs to a third numerical range (-45, -25]dB, starting from -25dB, the third numerical range is divided into multiple intervals with a step size of 4dB;
or
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

50. The device according to claim 40, wherein the processor is further configured to read the computer program in the memory and perform following operations:
obtaining a predefined step size corresponding to the quantized value, or receiving first information sent by the terminal, wherein the first information is used to indicate the step size corresponding to the quantized value;
determining the difference between the second measurement value and the first measurement value according to the first information and the difference information;
determining the target measurement value according to the first measurement value and the difference.

51. An information processing device, applied to a terminal, comprising:
a first sending unit, configured to send a first measurement value and difference information to a network device;
wherein, the difference information is used to indicate a quantized value corresponding to a difference between a second measurement value and the first measurement value;
the first measurement value is a maximum value or a minimum value among N measurement values of layer 1 cross-link interference L1-CLI, wherein N is an integer greater than 1;
the second measurement value is a measurement value other than the first measurement value among the N measurement values.

52. The device according to claim 51, further comprising:
a first processing unit, configured to quantize the difference Q between the second measurement value and the first measurement value with the same or different step sizes within the following range to obtain the difference information:
wherein the range comprises: X dB<Q≤0dB, or 0dB≤Q<Y dB, Q is an integer, X< -30, Y>30.

53. The device according to claim 51, the method further comprising:
a second processing unit, configured to obtain the difference information by one or more of the following manners:
the difference is quantized with a step size of S dB, wherein S is an integer greater than 2;
the difference is quantized with a step size of M dB, and a length of a field used to send the difference information is greater than 4 bits, wherein M is an integer greater than or equal to 2;
the difference is quantized with a step size T corresponding to a difference range in which the difference lies, wherein T is an integer greater than 0.

54. The device according to claim 53, wherein, if the difference is quantized with a step size of S=3dB, a mapping relationship between the difference and the difference information comprises:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

55. The device according to claim 53, wherein, if the difference is quantized with a step size of S=4dB, a mapping relationship between the difference and the difference information comprises:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

56. The device according to claim 53, wherein, if the difference is quantized with a step size of M=2dB, the length of the field used to send the difference information is equal to 5 bits; a mapping relationship between the difference and the difference information comprises:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

57. The device according to claim 53, wherein, if the difference is quantized with a step size of M=3dB, the length of the field used to send the difference information is equal to 5 bits; a mapping relationship between the difference and the difference information comprises:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

58. The device according to claim 53, wherein a mapping relationship between the difference and the difference information comprises:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

59. The device according to claim 58, wherein, if the difference belongs to a first numerical range (-20, 0]dB, starting from 0dB, the first numerical range is divided into multiple intervals with a step size of 2dB; and/or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

60. The device according to claim 53, wherein a mapping relationship between the difference and the difference information comprises:
if the difference belongs to a first numerical range (-10, 0]dB, starting from 0dB, the first numerical range is divided into multiple intervals with a step size of 2dB; and/or, if the difference belongs to a second numerical range (-25, -10]dB, starting from -10dB, the second numerical range is divided into multiple intervals with a step size of 3dB; and/or, if the difference belongs to a third numerical range (-45, -25]dB, starting from -25dB, the third numerical range is divided into multiple intervals with a step size of 4dB;
or,
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

61. The device according to claim 53, further comprising:
a step size corresponding to the quantized value being predefined; or,
a second sending unit, configured to send first information to the network device, wherein the first information is used to indicate the step size corresponding to the quantized value.

62. An information processing device, applied to a network device, comprising:
a first receiving unit, configured to receive a first measurement value and difference information sent by a terminal, wherein the difference information is a quantized value corresponding to a difference between a second measurement value and the first measurement value;
a first determining unit, configured to determine a target measurement value according to the first measurement value and the difference information;
wherein, the first measurement value is a maximum value or a minimum value among N measurement values of layer 1 cross-link interference L1-CLI, and the second measurement value is a measurement value other than the first measurement value among the N measurement values, wherein N is an integer greater than 1.

63. The device according to claim 62, wherein the difference information is obtained by quantizing the difference Q between the second measurement value and the first measurement value with the same or different step sizes within the following range:
wherein the range comprises: X dB<Q≤0dB, or 0dB≤Q<Y dB, Q is an integer, X< -30, Y>30.

64. The device according to claim 62, wherein the difference information is obtained by one or more of the following manners:
the difference is quantized with a step size of S dB, wherein S is an integer greater than 2;
the difference is quantized with a step size of M dB, and a length of a field used to send the difference information is greater than 4 bits, wherein M is an integer greater than or equal to 2;
the difference is quantized with a step size T corresponding to a difference range in which the difference lies, wherein T is an integer greater than 0.

65. The device according to claim 64, wherein, if the difference is quantized with a step size of S=3dB, a mapping relationship between the difference and the difference information comprises:
if the difference belongs to a numerical range (-45, 0]dB, starting from 0dB, the numerical range is divided into multiple intervals with a step size of 3dB, and first difference information corresponding to each interval is different; if the difference is less than or equal to -45dB, the difference information is second difference information; or
if the difference belongs to a numerical range [0, 45)dB, starting from 0dB, the numerical range is divided into multiple intervals with a step size of 3dB, and first difference information corresponding to each interval is different; if the difference is greater than or equal to 45dB, the difference information is second difference information.

66. The device according to claim 64, wherein, if the difference is quantized with a step size of S=4dB, a mapping relationship between the difference and the difference information comprises:
if the difference belongs to a numerical range (-60, 0]dB, starting from 0dB, the numerical range is divided into multiple intervals with a step size of 4dB, and first difference information corresponding to each interval is different; if the difference is less than or equal to -60dB, the difference information is second difference information; or
if the difference belongs to a numerical range [0, 60)dB, starting from 0dB, the numerical range is divided into multiple intervals with a step size of 4dB, and first difference information corresponding to each interval is different; if the difference is greater than or equal to 60dB, the difference information is second difference information.

67. The device according to claim 64, wherein, if the difference is quantized with a step size of M=2dB, the length of the field used to send the difference information is equal to 5 bits; a mapping relationship between the difference and the difference information comprises:
if the difference belongs to a numerical range (-62, 0]dB, starting from 0dB, the numerical range is divided into multiple intervals with a step size of 2dB, and first difference information corresponding to each interval is different; if the difference is less than or equal to -62dB, the difference information is second difference information; or
if the difference belongs to a numerical range [0, 62)dB, starting from 0dB, the numerical range is divided into multiple intervals with an interval length of 2dB, and first difference information corresponding to each interval is different; if the difference is greater than or equal to 62dB, the difference information is second difference information.

68. The device according to claim 64, wherein, if the difference is quantized with a step size of M=3dB, the length of the field used to send the difference information is equal to 5 bits; a mapping relationship between the difference and the difference information comprises:
if the difference belongs to a numerical range (-93, 0]dB, starting from 0dB, the numerical range is divided into multiple intervals with a step size of 3dB, and first difference information corresponding to each interval is different; if the difference is less than or equal to -93dB, the difference information is second difference information; or
if the difference belongs to a numerical range [0, 93)dB, starting from 0dB, the numerical range is divided into multiple intervals with a step size of 3dB, and first difference information corresponding to each interval is different; if the difference is greater than or equal to 93dB, the difference information is second difference information.

69. The device according to claim 64, wherein a mapping relationship between the difference and the difference information comprises:
if the difference belongs to a numerical range (-40, 0]dB, starting from 0dB, the numerical range is divided into multiple intervals and step sizes of the multiple intervals are the same or different, and first difference information corresponding to each interval is different; if the difference is less than or equal to -40dB, the difference information is second difference information; or
if the difference belongs to a numerical range [0, 40)dB, starting from 0dB, the numerical range is divided into multiple intervals and step sizes of the multiple intervals are the same or different, and first difference information corresponding to each interval is different; if the difference is greater than or equal to 40dB, the difference information is second difference information.

70. The device according to claim 69, wherein, if the difference belongs to a first numerical range (-20, 0]dB, starting from 0dB, the first numerical range is divided into multiple intervals with a step size of 2dB; or, if the difference belongs to a second numerical range (-40, -20]dB, starting from -20dB, the second numerical range is divided into multiple intervals with a step size of 4dB; or
if the difference belongs to a third numerical range [0, 20)dB, starting from 0dB, the third numerical range is divided into multiple intervals with a step size of 2dB; or, if the difference belongs to a fourth numerical range [20, 40)dB, starting from 20dB, the fourth numerical range is divided into multiple intervals with a step size of 4dB.

71. The device according to claim 64, wherein a mapping relationship between the difference and the difference information comprises:
if the difference belongs to a first numerical range (-10, 0]dB, starting from 0dB, the first numerical range is divided into multiple intervals with a step size of 2dB; or, if the difference belongs to a second numerical range (-25, -10]dB, starting from -10dB, the second numerical range is divided into multiple intervals with a step size of 3dB; or, if the difference belongs to a third numerical range (-45, -25]dB, starting from -25dB, the third numerical range is divided into multiple intervals with a step size of 4dB;
or
if the difference belongs to a fourth numerical range [0, 10)dB, starting from 0dB, the fourth numerical range is divided into multiple intervals with a step size of 2dB; or, if the difference belongs to a fifth numerical range [10, 25)dB, starting from 10dB, the fifth numerical range is divided into multiple intervals with a step size of 3dB; or, if the difference belongs to a sixth numerical range (25, 45]dB, starting from 25dB, the sixth numerical range is divided into multiple intervals with a step size of 4dB.

72. The device according to claim 62, wherein determining the target measurement value according to the first measurement value and the difference information comprises:
obtaining a predefined step size corresponding to the quantized value, or receiving first information sent by the terminal, wherein the first information is used to indicate the step size corresponding to the quantized value;
determining the difference between the second measurement value and the first measurement value according to the first information and the difference information;
determining the target measurement value according to the first measurement value and the difference.

73. A processor-readable storage medium, storing a computer program, wherein the computer program is configured to cause a processor to execute the method according to any one of claims 1 to 28.
